# FASCICULE DE BREVET EUROPEEN

(11) **EP 0 391 809 B1**
(45) Date de publication et mention de la délivrance du brevet: **08.06.1994**
(21) Numéro de dépôt: 90400953.7
(22) Date de dépôt: 06.04.1990
(51) Int. Cl.: E21B 23/00, E21B 23/08, G01V 1/40

(54) **Methode et dispositif de prospection sismique dans des puits et notamment des puits déviés**
Verfahren und Vorrichtung für seismisches Prospektieren in Bohrlöchern, besonders in abgelenkten Bohrlöchern
Method and apparatus for seismic prospecting in wells, especially in deviated wells

(30) Priorité: 06.04.1989 FR 8904554
(43) Date de publication de la demande: 10.10.1990
(73) Titulaire: INSTITUT FRANCAIS DU PETROLE, 92502 Rueil-Malmaison (FR)
(72) Inventeur: Wittrisch, Christian, F-92500 Rueil-Malmaison (FR)

(56) Documents cités:
- EP-A- 0 246 148
- FR-A- 2 547 861
- FR-A- 2 609 105
- US-A- 4 799 546

## Description

L'invention a pour objet une méthode et un dispositif de prospection dans des puits et notamment des puits déviés, comportant l'utilisation de moyens d'émission et de réception localisés dans une même portion de puits. Par puits déviés, il faut entendre les puits au moins en partie horizontaux ou très fortement inclinés par rapport à la verticale.

Plus particulièrement, l'invention concerne la réalisation d'enregistrements sismiques d'une zone du sous-sol traversée par une portion de puits horizontale, la portée d'investigation et la résolution étant intermédiaires entre celles que l'on obtient généralement avec des sondes de diagraphie soniques et celles permises par les méthodes classiques de prospection sismique à grande distance.

Les outils de diagraphie comportent généralement dans un même corps, un ou plusieurs organes d'émission adaptés à engendrer des signaux acoustiques dans une gamme de fréquence de l'ordre de 20 à 25 Khz et un ou plusieurs organes récepteurs correspondants. De tels outils sont bien adaptés pour l'étude fine des puits ou de leur environnement immédiat. Pour obtenir une grande portée, on utilise habituellement des ondes sismiques de très basse fréquence dans la gamme comprise entre 10 et 200 Hz par exemple,avec en contrepartie une résolution relativement faible. La source d'ébranlement sismique est généralement disposée en surface et les ondes renvoyées par les discontinuités souterraines sont captées par un ou plusieurs géophones logés dans le corps d'une sonde descendue dans un puits.

Il est intéressant pour les géophysiciens de disposer d'enregistrements sismiques concernant une zone relativement étendue des terrains traversés par des puits et notamment des puits déviés que l'on fore au travers des bassins sédimentaires pour mieux étudier leur configuration. La portée intermédiaire requise rend nécessaire l'emploi d'ondes acoustiques de fréquence bien plus basse que celles des sondes de diagraphies. Mais les résultats les plus intéressants ne peuvent être obtenus qu'en éloignant de façon significative la distance séparant les émetteurs d'ondes acoustiques et les récepteurs. Ceci peut être réalisé sans trop de difficulté dans les puits ou portions de puits verticaux en utilisant éventuellement un outil de puits comportant au moins une sonde satellite suspendue à une certaine distance sous une sonde principale. Mais, un tel agencement devient inopérant dans le cas de puits très fortement déviés et notamment dans des portions de puits horizontales, en raison des difficultés de progression et de manoeuvre des sondes.

Les ondes acoustiques de fréquence intermédiaire ont déjà été utilisées dans des puits. Par le brevet US n° 4 542 487, on connait un système de prospection sismique comportant une source disposée en surface qui émet des ondes acoustiques dans une gamme de fréquence intermédiaire jusqu'à 300 Hz. Les ondes sont reçues par différents géophones dans le corps d'une sonde de puits. Avec un tel agencement où la source reste en surface, la profondeur utile d'enfoncement de la sonde est restreinte pour les fréquences les plus hautes de la gamme de fréquence considérée. De plus, le dispositif décrit ne se prête pas à un usage dans une portion de puits très déviée. On peut citer aussi le brevet US n° 4 394 754 qui décrit l'utilisation dans un puits d'un ensemble constitué d'un émetteur de vibrations acoustiques à une fréquence de 1 Khz et de deux récepteurs espacés de quelques mètres. Il faut remarquer qu'un tel ensemble n'est pas non plus prévu pour fonctionner dans des portions de puits très déviés et que la distance entre l'émetteur et les récepteurs est ici très faible.

Dans la demande de brevet européen n° 246 148 est décrite une méthode de prospection sismique applicable particulièrement dans les portions de puits faiblement inclinées sur l'horizontale. Elle comporte l'utilisation d'un ou plusieurs émetteurs d'ondes acoustiques dont la fréquence se situe dans la bande 5000 à 10000 Hz et donc au-dessous de celle où fonctionnent généralement les sondes de diagraphies. Les ondes renvoyées par les discontinuités environnant le puits, sont reçues par un ou plusieurs capteurs piézo-électriques . Les émetteurs et les récepteurs sont disposés dans une sonde de puits unique fixée à l'extrémité d'un train de tiges et amenée par poussée jusque dans la zone déviée à étudier. L'espacement maximal entre les émetteurs et les récepteurs est de l'ordre d'une dizaine de mètres. Un tel agencement convient pour obtenir des diagraphies dans une zone élargie autour d'un puits. Mais il se prête mal à des opérations de prospection sismique à des fréquences notablement inférieures car le type de récepteurs utilisé ne permet pas de faire une discrimination entre les ondes montantes et descendantes. L'écart relativement réduit entre les émetteurs et les récepteurs, imposé par leur disposition dans une sonde unique, constitue également une Limitation.

La méthode selon l'invention se prête bien à la réalisation d'explorations dans des puits et notamment dans des portions de puits déviés avec des ondes acoustiques dans une bande de fréquence intermédiaire entre la bande sismique à très basse fréquence et la gamme de fréquence supérieure à 10 KHz généralement employée pour les diagraphies soniques. Elle comporte des moyens de réception comprenant au moins une sonde pourvue de moyens capteurs directionnels d'ondes acoustiques, et elle est caractérisée en ce que
- l'on relie ladite sonde à un dispositif de manoeuvre en surface par une colonne rigide, la sonde pouvant être désaccouplée mécaniquement de celle-ci par intermittence, ledit ensemble d'émission-réception comportant aussi des moyens d'émission d'ondes acoustiques comprenant au moins une source d'ondes acoustiques intercalée sur la colonne entre la sonde et le dispositif de manoeuvre, un câble multi-conducteurs pour relier l'ensemble d'émission-réception à un ensemble de commande et d'enregistrement disposé en surface des moyens pour appliquer lesdits moyens capteurs contre la paroi du puits, et un système de connexion différée pour établir automatiquement la connexion électrique entre successivement la source et la sonde après descente de celle-ci dans le puits et entre l'ensemble de commande et d'enregistrement et ladite source après descente de celle-ci dans le puits,
- on désaccouple mécaniquement la sonde de la colonne rigide et on applique lesdits moyens capteurs contre la paroi du puits,
- Lesdits moyens capteurs étant maintenus en position fixe, on déclenche l'émission d'ondes acoustiques par la source depuis l'ensemble de commande et d'enregistrement,
- on transmet à l'ensemble de commande et d'enregistrement par le câble multi-conducteurs, des signaux renvoyés par les discontinuités environnant le puits et recus par les moyens capteurs,
- on répète les deux étapes précédentes en une pluralité d'emplacements du puits où l'ensemble d'émission-réception est successivement amené par traction sur la colonne rigide, et
- on rétablit le couplage mécanique de la sonde à la colonne rigide.

Par un choix judicieux de la distance entre la sonde et la source qui peut être changée facilement par adjonction ou retrait entre elles d'un certain nombre de sections de tubage, et en émettant des ondes acoustiques dont le pouvoir de résolution dans les terrains traversés par le puits est par exemple de l'ordre du mètre, on peut obtenir des coupes sismiques relativement fines avec une portée de 50 à 100 mètres par exemple, ce qui est très utile pour l'exploration de zones reconnues intéressantes.

Le dispositif de prospection pour la mise en oeuvre de la méthode selon l'invention comprend au moins une sonde de puits de section adaptée à celle du puits à explorer, pourvue de moyens capteurs directionnels, une colonne tubulaire rigide pour relier la sonde à un dispositif de manoeuvre en surface, et un câble pour relier la sonde à un ensemble de commande et d'enregistrement en surface des moyens d'émission intercalés sur ladite colonne entre la sonde et le dispositif de manoeuvre comprenant au moins une source d'ondes. Il est caractérisé en ce qu'il comporte des moyens pour coupler lesdits moyens capteurs avec la paroi du puits, un système de connexion différée pour établir une interconnexion électrique d'une part entre la source et la sonde après descente de celle-ci dans le puits, et d'autre part entre l'ensemble de commande et d'enregistrement et la source après descente de celle-ci dans le puits.

Suivant un mode de réalisation, la sonde et la source sont associées respectivement par exemple à deux blocs de guidage comportant chacun un corps tubulaire fixé à la colonne rigide et un élément de guidage déplaçable dans le corps entre une position de retrait et une position avancée, des moyens de verrouillage des deux éléments de guidage en position de retrait par rapport auxdits corps tubulaires et des moyens, coopérant avec les deux éléments de guidage pour pousser ces derniers vers leurs positions avancées respectives, la sonde étant découplée mécaniquement du corps tubulaire associé dans ladite position avancée.

Le système de connexion peut comporter une première fiche de raccordement électrique fixée à l'élément de guidage associé à la sonde, une première prise électrique enfichable en milieu liquide raccordée à un premier élément de câble multi-conducteurs lequel est relié à ladite source, une seconde fiche de raccordement électrique fixée à l'élément de guidage associé à la source, une seconde prise électrique enfichable en milieu liquide raccordée à un second élément de câble multi-conducteurs,lequel est connecté audit ensemble central de commande et d'enregistrement, des moyens de guidage de la première et de la seconde prises permettant leur connexion électrique aux deux fiches correspondantes et des moyens pour établir une circulation de fluide dans ladite colonne, de manière à pousser lesdites prises vers leurs positions d'engagement au contact respectivement des deux fiches, et des moyens de verrouillage desdites prises en position d'engagement.

La source comporte par exemple au moins un vibrateur du type piézo-électrique ou magnétostrictif associé à des moyens pour engendrer des signaux vibratoires continus ou impulsionnels, ou bien un étinceleur ou sparker.

Les moyens de réception peuvent comporter plusieurs capteurs directionnels tels que des géophones ou accéléromètres dont les axes sont dirigés suivant des directions différentes, ces capteurs étant disposés par exemple sur un support orientable par rapport au corps de la sonde .

La source peut comporter plusieurs éléments repartis à distance les uns des autres le long de la colonne rigide. De même, plusieurs sondes peuvent être réparties à distance les unes des autres le long de la colonne rigide.

Suivant un second mode de réalisation la source est fixée au corps de son bloc de guidage et comporte un passage suivant son axe, permettant le déplacement conjugué des deux éléments de guidage lorsqu'ils sont reliés au moyen du câble multi-conducteurs, le dispositif comportant aussi des moyens conducteurs auxiliaires pour relier la source à ce même câble multi-conducteurs.

D'autres caractéristiques et avantages de la méthode et du dispositif selon l'invention apparaitront mieux à la lecture de la description ci-après en se référant aux dessins annexés où:
- la Fig.1 montre un premier mode de réalisation de l'ensemble d'émission-réception comportant une source d'émission et une sonde de mesure espacées l'un de l'autre le long d'une colonne rigide;
- la fig.2 montre une première étape de mise en place de la sonde dans le puits;
- la Fig.3 montre une seconde étape ou la source est ajoutée et connectée à la sonde;
- la Fig.4 montre une troisième étape où l'on relie l'ensemble d'émission-réception à un ensemble de commande et d'enregistrement en surface, après l'avoir conduit jusque dans une partie très déviée d'un puits;
- la Fig.5 montre le désaccouplage mécanique de la sonde avant le début des cycles d'émission-réception;
- les Fig.6 et 7 montrent deux modes différents d'orientation dans l'espace de capteurs directifs inclus dans chaque sonde;
- la Fig. 8 montre un mode d'installation de capteurs sur un support orientable;
- la Fig. 9 montre un mode d'installation de plusieurs vibrateurs sur un support orientable.
- la Fig. 10 montre un second mode de réalisation du dispositif d'émission-réception; et
- la Fig. 11 montre une vue partielle de la colonne reliant la source à la sonde et pourvue de moyens d'amortissement.

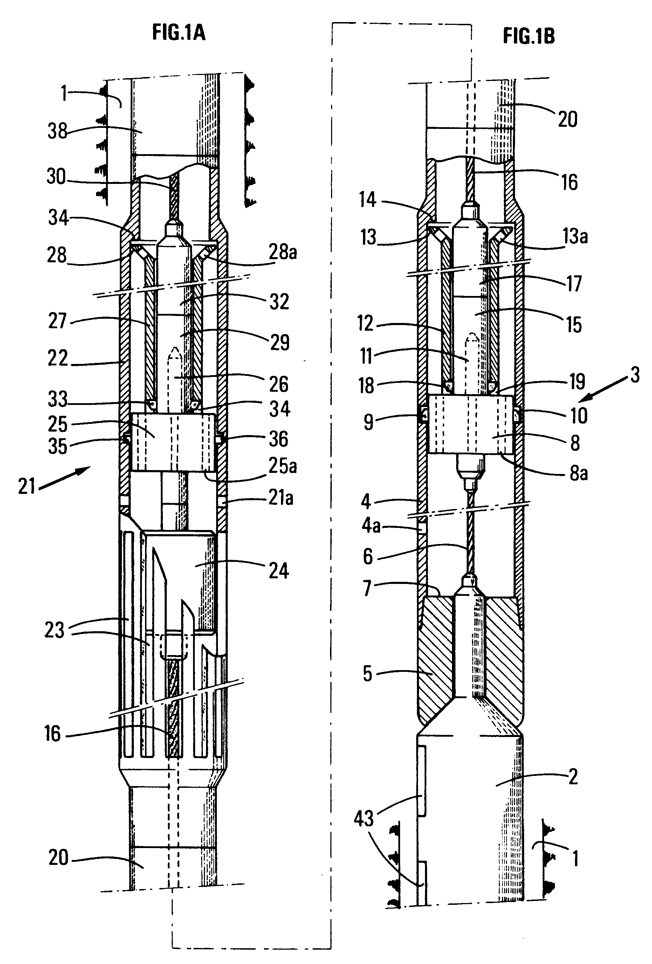

L'ensemble d'émission-réception représenté à la figure 1 en position d'interconnexion, est adapté à être descendu dans un puits 1. Il comporte une sonde de mesure 2 associée à un bloc de guidage 3 analogue à celui décrit dans la demande de brevet francais publiée n° 2.609.105. Le bloc de guidage 3 comporte un corps tubulaire 4 pourvu à une première extrémité, d'un embout 5. La paroi extérieure de cet embout est évasée. Sa forme est adaptée à celle de l'extrémité de la sonde de manière à assurer le centrage de celle-ci quand elle est en appui contre l'embout. Un câble de liaison 6 passant par une ouverture 7 de l'embout 5, relie l'extrémité supérieure de la sonde 2 à un élément de guidage 8 déplacable à l'intérieur du corps tubulaire 4 entre une position de retrait (Fig.1) et une position avancée plus proche de l'embout 5. Des moyens de verrouillage bloquent l'élément de guidage 8 en position de retrait. Ils peuvent être constitués par exemple de chiens 9 à commande électrique ou électro-hydraulique pouvant être actionnés depuis la surface, qui viennent s'engager dans des rainures 10 du corps tubulaire. La longueur du câble 6 est choisie de manière que la sonde soit fermement en appui sur l'embout en position de retrait de l'élément de guidage 8. Du côté opposé au câble 6 et connecté à celui-ci, l'élément de guidage 8 comporte une fiche mâle multi-contacts 11, orientée suivant l'axe du corps 4 et un prolongement tubulaire 12 de section inférieure à celle du corps 4, terminé par une collerette 13. Celle-ci vient en butée contre un épaulement intérieur 14 du corps, en position de retrait de l'élément de guidage. La collerette 13 sert au guidage d'une prise femelle 15 vers la fiche mâle 11. La prise femelle 15 est connectée aux différents conducteurs d'un câble multi-conducteurs 16. La prise 15 est surmontée d'une barre de lestage tubulaire 17 de section sensiblement égale. Des moyens de blocage 18 permettent de solidariser la prise femelle à l'élément de guidage 8 lorsqu'elle est engagée sur la fiche mâle 11. A cet effet, on peut utiliser aussi des chiens 18 déclenchables à distance qui viennent s'engager dans des rainures 19 à la base du prolongement tubulaire 12.

Des exemples de connecteurs électriques utilisant ce type de fiche mâle multi-contacts et de prise femelle adaptée, sont décrits par exemple dans le brevet US 4 500 155.

Des ouvertures 4a et 13a sont pratiquées dans la collerette 13 et la paroi du corps 4 et l'élément de guidage est traversé de canaux de manière qu'un courant de fluide puisse circuler entre l'intérieur et l'extérieur de la colonne tubulaire.

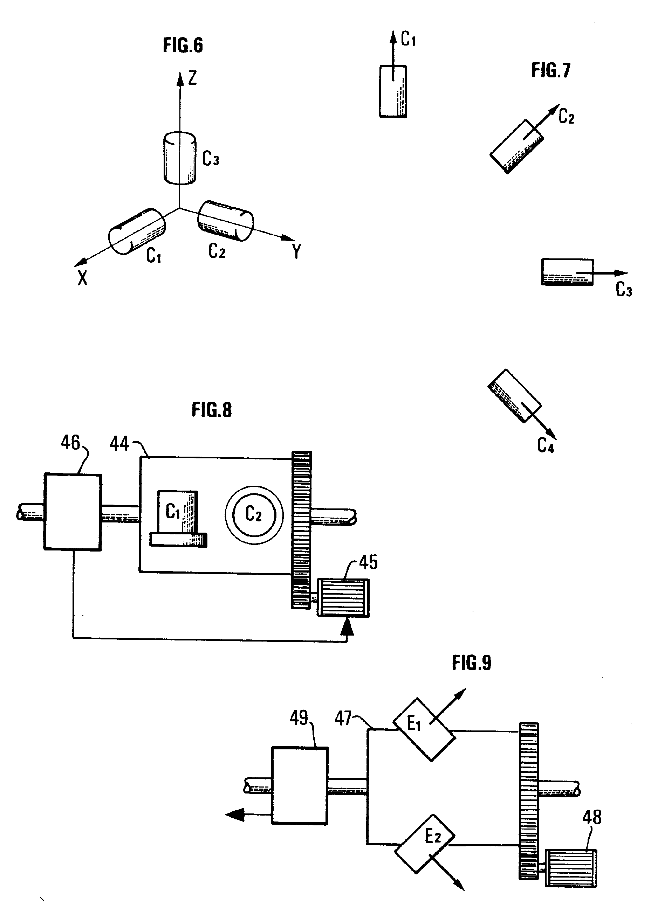

Comme on le verra en relation avec les Fig. 6 à 8 ,la sonde 2 comporte des logements notamment pour un ou plusieurs géophones directionnels ou des accéléromètres, pour capter les ondes acoustiques renvoyées par les discontinuités environnant le puits.

La longueur du corps 4 et la course possible de l'élément de guidage 8 entre sa position de retrait verrouillée et sa position avancée où elle vient en butée contre l'embout 5, sont choisies de manière que la sonde puisse être éloignée suffisamment du corps tubulaire 4.

Le corps tubulaire 4 est connecté à une première colonne tubulaire ou tubage 20 constituée par interconnexion de plusieurs sections de tube identiques, par exemple.

A l'extrémité opposée du tubage 20 est fixé un second bloc de guidage 21 comportant un corps tubulaire 22 analogue au corps 4. Il comporte un compartiment 22a communiquant avec l'extérieur du corps par des rainures longitudinales 23 ménagées au travers de sa paroi. Une source sismique 24 est disposée dans le compartiment 22a. On peut utiliser par exemple une source vibratoire et notamment une source magnéto-strictive ou piézo-électrique à fréquence constante. Sa fréquence de vibration est choisie dans la gamme de fréquence intermédiaire c'est-à-dire de l'ordre de quelques kHz. On peut aussi utiliser un étinceleur ou sparker ayant un large spectre d'émission.

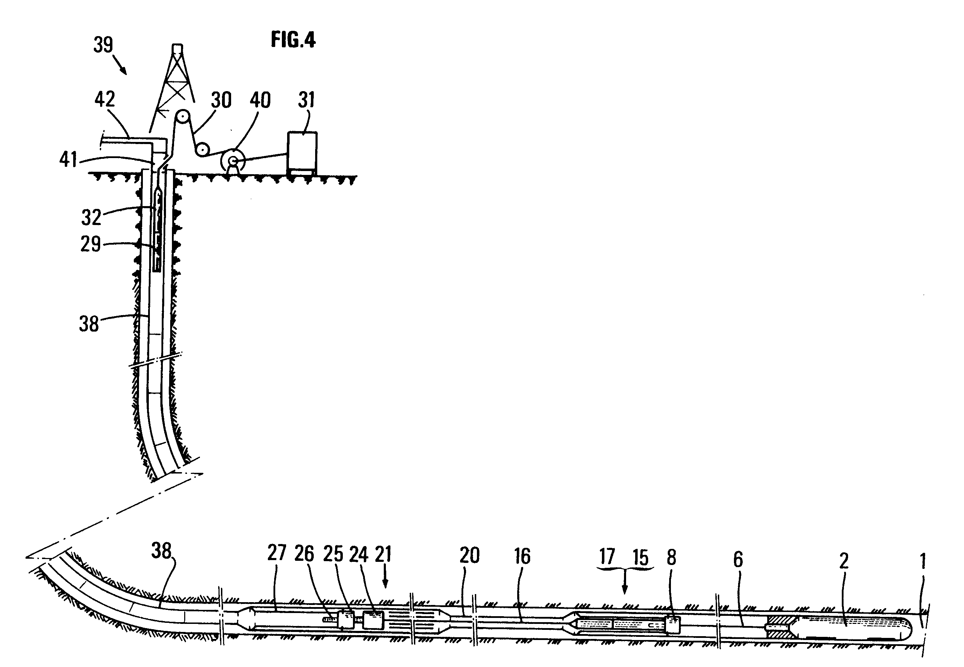

Du côté opposé au tubage 20, la source est raccordée à un élément de guidage 25 de section adaptée à la section intérieure du second corps tubulaire 21. Sur cet élément 25 est fixée une fiche mâle multi-contacts 26 orientée suivant l'axe du corps 21 et disposée au centre d'un prolongement tubulaire de guidage 27. Une collerette 28 facilite le guidage vers la fiche 26 d'une prise femelle multi-contacts 29 raccordée à un second câble multi-conducteurs 30 permettant de connecter l'ensemble d'émission-réception (2, 24) à un ensemble central de commande et d'enregistrement 31 (cf. fig. 4) disposé hors du puits. De la même façon, la prise femelle 29 est surmontée d'une barre de lestage 32 et pourvue de moyens de blocage en position d'enfichage pouvant être télécommandés depuis la surface. Ces moyens de blocage par exemple des chiens électriques 33 venant s'engager dans des rainures 34 adaptées situées à la base du prolongement tubulaire 27. La continuité électrique entre les contacts de la fiche mâle 26 et les conducteurs du câble 16 est assurée par des lignes conductrices disposées à l'intérieur de la source 24 et non représentées.

L'élément de guidage 25 est pareillement pourvu de moyens de verrouillage 35 pouvant être télécommandés depuis la surface, constitués par exemple de chiens électriques qui viennent s'engager dans des rainures 36 ménagées dans la paroi du second corps tubulaire 21. L'ensemble de la source 24 et de son élément de guidage 25 est susceptible de se déplacer à l'intérieur du corps 21 entre une position de retrait où la collerette 28 vient buter contre un épaulement 27 de la paroi intérieure et où les myens de verrouillage sont en face des rainures 36, et une position avancée. La course de cet ensemble 24, 25 dans le corps 22, entre les deux positions, est sensiblement égale à celle de l'élément de guidage 8 à l'intérieur du premier corps tubulaire 1.

De la même façon, la collerette 28 et la paroi du second corps 22 comportent des ouvertures 28a, 21a et l'élément de guidage 25 est traversé de canaux 25a, de manière qu'un courant de fluide puisse s'établir entre l'intérieur et l'extérieur du corps tubulaire 21.

Celui-ci, à son extrémité opposée à la source 24, est connecté à une seconde colonne tubulaire ou tubage 38 constitué par interconnexion de sections de tube et permettant par ajouts successifs, de conduire l'ensemble d'émission-réception jusqu'à la profondeur requise même dans des portions de puits très déviées. L'opération est menée au moyen d'un dispositif de manoeuvre 39 (fig. 4) d'un type connu dans le domaine du forage. Le câble multi-conducteurs 30 déroulé d'un touret 40 est descendu jusqu'au second corps 21 le long de la colonne 38.

Suivant un agencement connu notamment par le brevet français n° 2.547.861, la connexion entre le troisième câble multi-conducteurs 30 et l'ensemble central 31 est facilitée par l'emploi d'un raccord spécial à fenêtre latérale 41 connu des spécialistes sous le nom de "Side entry Sub", schématisé à la figure 4. Quand on procède à un raccordement différé de la prise femelle 29 sur la fiche 26 dans le second corps tubulaire 21, après descente de l'ensemble d'émission-réception, on utilise de préférence une propulsion hydraulique. La colonne 34 est coiffée d'une tête d'injection 42. Le courant de fluide s'établit à l'intérieur de la colonne et le retour s'effectue par les orifices 28a et 21a, les canaux 25a au travers de la pièce de guidage 25 et l'espace annulaire entre la colonne et le puits.

La sonde 2 peut comporter des bras d'ancrage 43 repliés le long du corps durant la descente de celle-ci. Un système de commande électro-hydraulique du type décrit par exemple dans le brevet français 2 501 380, peut être utilisé pour écarter les bras 43. L'ouverture des bras a pour effet de plaquer le corps de la sonde contre la paroi du puits durant les cycles successifs d'émission-réception. Les bras d'ancrage 43 peuvent aussi être décalés comme le montre le brevet francais n° 2 609 100.

La sonde peut comporter avantageusement plusieurs capteurs directionnels dont les axes sont disposés de manière à capter des signaux suivant plusierus directions différentes. On peut utiliser par exemple des géophones et/ou accéléromètres tri-axiaux C1, C2, C3 dont les axes sont orthogonaux deux à deux (fig. 6) ou bien encore des blocs de quatre capteurs (C1, C2, C3, C4) dont les axes sont dans un même plan à 45° les uns des autres, comme schématisé à la figure 7. L'ensemble de capteurs est de préférence disposé sur un support orientable 44 (fig. 8) pouvant être amené dans une position angulaire déterminée par rapport au corps de la sonde 2 par action d'un moteur électrique 45. L'action sur le moteur permettant d'introduire une correction angulaire appropriée, est déterminée par une mesure d'orientation au moyen d'un pendule d'un type connu 46.

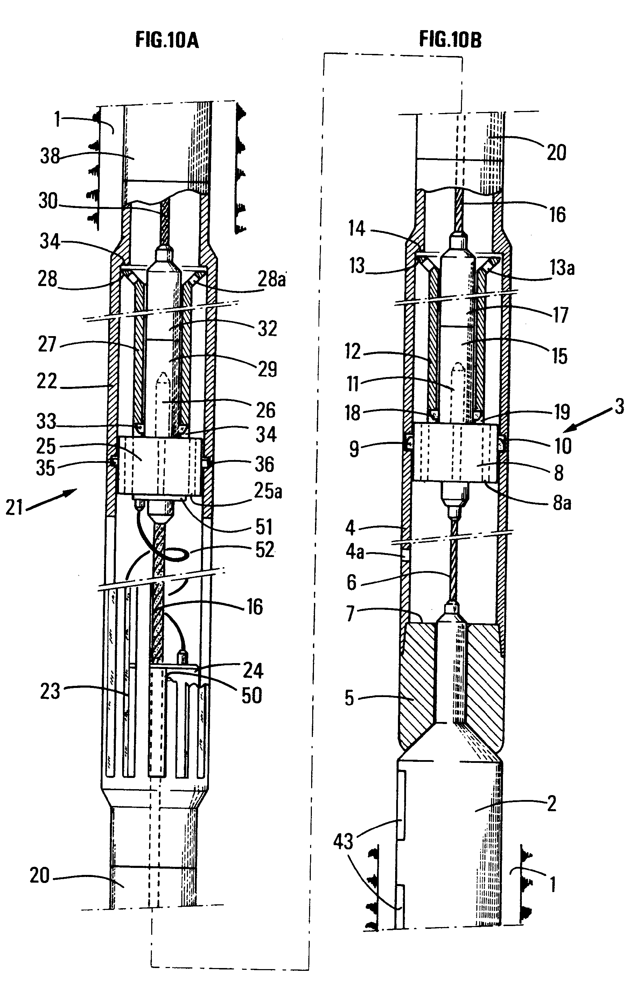

La source 24 peut être omni-directionnelle. Mais, de la même façon, on peut utiliser (fig. 9) une source constituée de un ou plusieurs éléments d'émission E1, E2 montés sur un support 47 orientable par action d'un moteur électrique 48 que l'on commande à distance depuis la surface. Les indications sur l'orientation effective des unités d'émission E1, E2 sont mesurées par un moyen de mesure d'écart angulaire tel qu'un pendule 49 et transmises à l'opérateur par le câble multi-conducteurs 30.

Pour les besoins de l'exploration sismique, il est possible d'utiliser une source constituée de plusieurs éléments d'émission espacés les uns des autres suivant l'axe du puits.

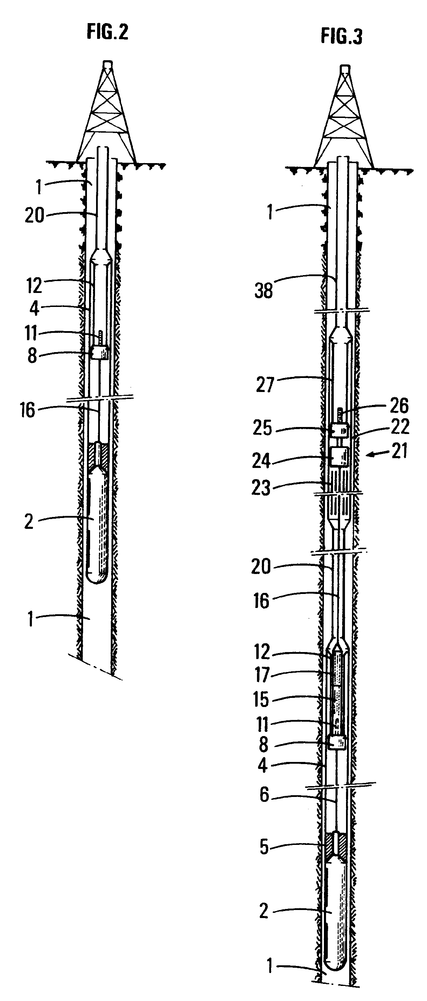

La mise en place du dispositif d'émission-réception dans une portion de puits inclinée, est réalisée comme indiqué ci-après et illustrée par les figures 2-5.

La sonde 2 assujettie à son bloc de guidage 3, est d'abord introduite dans le puits 1. Par raccordements successifs d'un certain nombre de sections de tubage, (constituant la seconde colonne tubulaire 20) on fait descendre l'ensemble jusqu'à une profondeur déterminée (fig. 2).

Puis on introduit dans le puits la première fiche femelle 15 à l'extrémité du second câble multi-conducteurs 16. Lestée par la barre 17, elle descend par son propre poids jusqu'à venir s'enficher sur la prise mâle 11. Les moyens de verrouillage 18 sont alors actionnés de manière à solidariser la prise 11 au premier corps tubulaire 4. On fixe alors à la colonne 20 le second corps tubulaire 22 contenant la source 24 (fig. 3).
- On raccorde ensuite le second corps tubulaire 22 à une première section de tubage et, par connexions successives, on constitue la seconde colonne rigide 38. On descend ainsi l'ensemble d'émission-réception 2,24 jusque dans la portion de puits où vont être conduites les opérations de prospection sismique (fig. 4).
- Le raccord spécial 41 est mis en place. Le troisième câble multi-conducteurs 30 portant à son extrémité la seconde prise femelle 29 lestée de sa barre 32, est introduit dans la colonne 38. Le raccord spécial 41 est recouvert d'une tête d'injection 42 et l'on établit une circulation de fluide de façon à propulser la prise lestée 29 vers la fiche mâle 26 à l'extrémité inférieure de la colonne 38 jusqu'à obtenir le verrouillage des moyens de connexion 33. L'ensemble d'émission-réception est alors en mesure de fonctionner.

Suivant le mode de réalisation de la figure 10, la source 24 est fixée dans la partie inférieure du second corps tubulaire 21. Un passage 50 est ménagé suivant son axe pour le câble 16 reliant en opération les deux éléments de guidage 8 et 25, de manière à permettre leur déplacement simultané lorsqu'une traction est exercée sur le câble 30 au moyen du dispositif de manoeuvre 39 (fig. 4).

L'alimentation électrique de la source 24 est permise par un moyen de connexion secondaire disposé entre la source et la fiche multi-contacts 26 de l'élément de guidage 25. Ce moyen de connexion comporte un boîtier de dérivation 51 permettant de connecter un ou plusieurs contacts de la fiche multi-contacts 26 à un câble secondaire 52 de commande relié à la source 24. Le câble 52 est suffisamment lâche pour autoriser le déplacement de l'élément de guidage 25 à l'intérieur du corps 22.

Le mode de mise en place progressive du dispositif d'émission-réception est pratiquement le même que celui précédemment décrit.

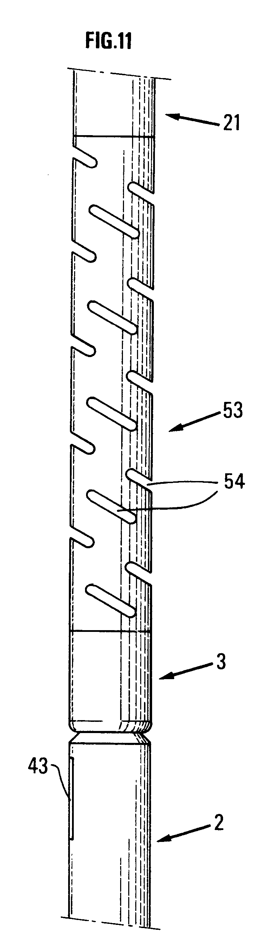

Quel que soit le mode de réalisation choisi, on relie de préférence la source 24 à la sonde 2 par une portion de colonne 20 pourvue de moyens d'amortissement de signaux, de manière à affaiblir et retarder les ondes qui se propagent direction le long des tubes ou dans le fluide du puits. On peut utiliser par exemple (Fig. 11) une partie de colonne 53 dont la paroi est pourvue selon un agencement connu en soi, d'ouvertures 54 telles que des fentes minces réparties sur son pourtour. La liaison entre la source et la sonde peut encore être réalisée au moyen d'une portion de colonne réalisée en un matériau susceptible d'amortir les vibrations ou bien revêtir de couches de matériaux amortisseurs.

La connexion électrique entre l'ensemble central et le dispositif d'émission-réception au fond ayant été réalisée comme on l'a vu plus haut, on ajoute un certain nombre de sections supplémentaires, de manière à amener le dispositif jusqu'à un emplacement choisi où des opérations d'exploration sismiques doivent être effectuées.

On commence par séparer la sonde 2 de son bloc de guidage 3.

Cette séparation est possible après libération des moyens de verrouillage 9 et 32 commandés depuis l'ensemble central 31 en surface. Le coulissement dans leurs corps respectifs 4, 22 des deux éléments de guidage 8 et 25 reliés respectivement à la sonde 2 et à la source 24, est obtenu par une poussée de fluide, la tête d'injection étant remise en place. La sonde 2 se dégage de son siège contre l'embout 5.

On peut aussi ancrer les bras 43 de la sonde 2 à la paroi du puits tout en remontant la colonne 30, pour amener l'élément de guidage 8 en butée contre l'embout 5. De préférence on combine les deux opérations pour faciliter l'extraction.

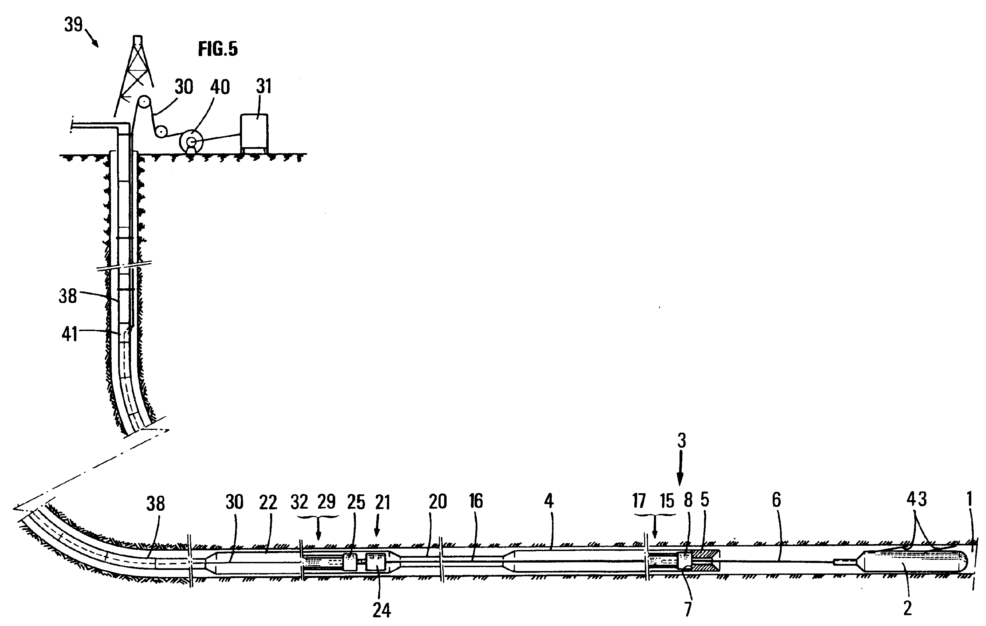

Le câble 6 est alors détendu de manière à découpler mécaniquement du bloc de guidage 3 le corps de la sonde (Fig. 5) et soustraire celle-ci aux vibrations de la colonne rigide (30, 38).

On procède alors à un ou plusieurs cycles d'émission-réception. Les signaux reçus par les capteurs directionnels C sont transmis à l'ensemble central de commande et d'enregistrement 31 par l'intermédiaire des conducteurs incorporés aux câble 6, 16 et 30. La liaison électrique entre ces conducteurs et l'ensemble 31 est réalisée de façon connue par un ensemble de balais frottant sur des bagues collectrices solidaires de l'arbre du touret 36.

Une fois les mesures effectuées à la première station, on désancre les bras de la sonde, puis on remonte la colonne 30 en tirant la sonde 2 jusqu'à la deuxième station de mesure, par exemple 5 ou 10 mètres plus près de la surface. La sonde 2 est de nouveau ancrée et l'on redescend légèrement la colonne 38, de manière à détendre la câble 6. A l'extrémité supérieure du tubage 38, des sections de tube sont enlevés et le câble enroulé sur le touret 40.

Le même processus est recommencé à chaque station, jusqu'à ce que le raccord spécial 41 soit revenu sensiblement au niveau de la surface. Après avoir fermé les bras 43 de la sonde, on exerce alors une traction sur le câble de transmission 30 pour faire coulisser les éléments de guidage 8, 25 vers leurs positions de retrait respectives et par une commande, l'on déclenche les moyens de verrouillage 9, 33, de manière à les rendre solidaires des deux corps 4, 22. La sonde 2 revient en appui contre la butée 5.

Par action sur les moyens de verrouillage 33, on libère la prise lestée 29 et l'on remonte le câble 30. Après le retour du second corps 22 jusqu'à la surface, on commande le dégagement de la prise lestée 15. La partie émettrice du dispositif peut alors être détachée de la colonne 20. L'opération de retrait se poursuit jusqu'au retour de la sonde 2 en surface.

Le raccord spécial 41 est démonté. On relève enfin la sonde 2 et le bloc de guidage 3 de la même manière qu'ils avaient été descendus.

Pour cette méthode, on peut effectuer des séries de mesures ou interventions dans des zones de puits horizontales, fortement inclinées (par rapport à la verticale), voire verticales.

La méthode décrite permet de réaliser des profils sismiques particulièrement intéressants lorsque le puits est horizontal ou très dévié et que l'on désire reconnaître précisément et dans des zones qui seraient autrement difficiles à explorer par sondage, des formations géologiques, telles le toit d'un réservoir ou des couches situées de part et d'autre de la portion horizontale ou fortement inclinée du puits.

On choisit de préférence une fréquence d'émission dans la bande 200 à 2000 Hz. Dans des formations où la vitesse des ondes est de l'ordre de 3000 m/s par exemple, on obtient une résolution comprise entre 0,35 et 3,75 m. Avec une fréquence de cet ordre, la portée utile des ondes est de 50 à 100 mètres et leur pouvoir de résolution est de l'ordre de 1 m.

On ne sortirait pas du cadre de l'invention en utilisant plusieurs sondes de mesure telle que la sonde 2, maintenues espacées les unes des autres le long du puits au moyen d'éléments de liaison assez rigides pour transmettre les poussées axiales nécessaires à l'avancement du dispositif mais susceptibles d'atténuer les transmissions directes entre elles des ondes reçues.

Le dispositif selon l'invention se prête bien à des opérations dans des puits très déviés. Il est bien entendu cependant qu'il peut être utilisé dans les puits verticaux ou sensiblement verticaux.

Les exemples décrits portent sur un dispositif d'émission-réception pourvus de moyens d'émission et de réception d'ondes sismiques ou acoustiques. On ne sortirait pas non plus du cadre de l'invention en remplaçant les moyens décrits par tous autres moyens d'émission et de réception de signaux d'un type quelconque pour bénéficier des avantages liés à la structure d'ensemble de dispositif.

## Revendications

1. Méthode de prospection dans des puits au moyen d'ondes acoustiques et notamment dans des puits déviés au moyen d'un ensemble d'émission-réception d'ondes acoustiques comportant des moyens de réception comprenant au moins une sonde (2) pourvue de moyens capteurs directionnels d'ondes acoustiques, caractérisée en ce que
- L'on relie ladite sonde à un dispositif de manoeuvre (39) en surface par une colonne rigide, la sonde pouvant être désaccouplée mécaniquement de celle-ci par intermittence, ledit ensemble d'émission-réception comportant aussi des moyens d'émission d'ondes acoustiques comprenant au moins une source d'ondes acoustiques (24) intercalée sur la colonne entre la sonde (2) et le dispositif de manoeuvre (39), un câble multi-conducteurs (6, 16, 30) pour relier l'ensemble d'émission-réception à un ensemble de commande et d'enregistrement (31) disposé en surface, des moyens (43) pour appliquer lesdits moyens capteurs contre la paroi du puits, et un système de connexion différée pour établir automatiquement la connexion électrique entre successivement la source et la sonde après descente de celle-ci dans le puits et entre l'ensemble de commande et d'enregistrement et ladite source après descente de celle-ci dans le puits,
- on désaccouple mécaniquement la sonde de la colonne rigide (20, 38) et on applique lesdits moyens capteurs contre la paroi du puits,
- lesdits moyens capteurs étant maintenus en position fixe, on déclenche l'émission d'ondes acoustiques par la source depuis l'ensemble de commande et d'enregistrement,
- on transmet à l'ensemble de commande et d'enregistrement par le câble multi-conducteurs, des signaux renvoyés par les discontinuités environnant le puits et recus par les moyens capteurs,
- on répète les deux étapes précédentes en une pluralité d'emplacements du puits où l'ensemble d'émission-réception est successivement amené par traction sur la colonne rigide, et
- on rétablit le couplage mécanique de la sonde à la colonne rigide.

2. Dispositif de prospection pour la mise en oeuvre de la méthode selon la revendication 1, comprenant au moins une sonde de puits de section (2) adaptée à celle du puits à explorer, pourvue de moyens capteurs directionnels (C1, C2...), une colonne tubulaire rigide (20, 38) pour relier la sonde à un dispositif de manoeuvre (39) en surface, et un câble (6, 16, 30) pour relier la sonde à un ensemble (31) de commande et d'enregistrement en surface, des moyens d'émission intercalés sur ladite colonne entre la sonde et le dispositif de manoeuvre, comprenant au moins une source d'ondes (24), caractérisé en ce qu'il comporte des moyens (43) pour coupler lesdits moyens capteurs avec la paroi du puits, un système de connexion différée pour établir une interconnexion électrique d'une part entre la source et la sonde après descente de celle-ci dans le puits, et d'autre part entre l'ensemble de commande et d'enregistrement et la source après descente de celle-ci dans le puits.

3. Dispositif selon la revendication 2, caractérisé en ce que la sonde (2) et la source (24) sont associées respectivement à deux blocs de guidage (3, 21) comportant chacun un corps (4, 22) tubulaire fixé à la colonne rigide et un élément de guidage déplaçable (8, 25) dans le corps (4, 22) entre une position de retrait et une position avancée, des moyens de verrouillage (9, 35) des deux éléments de guidage en position de retrait par rapport auxdits corps tubulaires et des moyens hydrauliques, coopérant avec les deux éléments de guidage pour pousser ces derniers vers leurs positions avancées respectives, la sonde (2) étant découplée mécaniquement du corps (4) tubulaire associé dans ladite position avancée.

4. Dispositif selon la revendication 2 ou 3, caractérisé en ce que le système de connexion comporte une première fiche (11) de raccordement électrique fixée à l'élément de guidage (8) associé à la sonde (2), une première prise électrique (15) enfichable en milieu liquide raccordée à un premier élément (16) de câble multi-conducteurs lequel est relié à ladite source (24), une seconde fiche de raccordement électrique (26) fixée à l'élément de guidage (25) associé à la source (24), une seconde prise électrique (29) enfichable en milieu liquide raccordée à un second élément de câble multi-conducteurs (30),lequel est connecté audit ensemble central de commande et d'enregistrement (31), des moyens de guidage (12, 27) de la première et de la seconde prises (15, 29) permettant leur connexion électrique aux deux fiches correspondantes (11, 26) et des moyens pour établir une circulation de fluide dans ladite colonne, de manière à pousser lesdites prises vers leurs positions d'engagement au contact respectivement des deux fiches, et des moyens de verrouillage (18, 33) desdites prises en position d'engagement.

5. Dispositif selon la revendication 4, caractérisé en ce qu'il comporte des moyens pour solidariser la source et le premier élément de câble multi-conducteurs, de manière à déplacer ensemble la sonde et la source entre leurs positions de retrait et leurs positions avancées respectives.

6. Dispositif selon l'une des revendications précédentes, caractérisé en ce que la source (24) comporte au moins un vibrateur.

7. Dispositif selon l'une des revendications 1 à 5, caractérisé en ce que la source (24) comporte au moins un étinceleur.

8. Dispositif selon la revendication 6, caractérisé en ce que chaque vibrateur est du type magnétostrictif ou piézo-électrique.

9. Dispositif selon la revendication 6, caractérisé en ce que chaque vibrateur est associé à des moyens d'émission de signaux acoustiques dont la fréquence est choisie de manière que le pouvoir de résolution dans les formations traversées par le puits soit de l'ordre de 1 mètre.

10. Dispositif selon la revendication 2, caractérisé en ce que les moyens capteurs (C1, C2...) comportent plusieurs capteurs directionnels dont les axes sont dirigés suivant des directions différentes.

11. Dispositif selon la revendication 10, caractérisé en ce que les moyens capteurs sont disposés sur un support (44) orientable par rapport au corps de la sonde (2).

12. Dispositif selon la revendication 11, caractérisé en ce qu'il comporte un moyen (46) connecté à l'ensemble de commande et d'enregistrement (31) pour détecter l'orientation dudit support (44) et un moyen moteur (45) pouvant être actionné à distance, pour changer l'orientation dudit support.

13. Dispositif selon la revendication 6, caractérisé en ce que chaque vibrateur est associé à un générateur de signaux acoustiques impulsionnels.

14. Dispositif selon la revendication 2, caractérisé en ce que la source comporte plusieurs éléments (E1 E2) répartis à distance les uns des autres le long de la colonne rigide.

15. Dispositif selon la revendication 2, caractérisé en ce qu'il comporte une pluralité de sondes réparties à distance les unes des autres le long de la colonne rigide.

16. Dispositif selon la revendication 3 ou 4, caractérisé en ce que la source (24) est fixée au corps (22) de son bloc de guidage et comporte un passage (50) suivant son axe permettant le déplacement conjugué des deux éléments de guidage (8, 25) Lorsqu'ils sont reliés au moyen du câble multi-conducteurs, le dispositif comportant des moyens conducteurs auxiliaires (52) pour relier ladite source (24) audit câble multi-conducteurs.

17. Dispositif selon l'une des revendications 2 à 16, caractérisé en ce qu'il comporte des moyens d'amortissement pour amortir les ondes se propageant le long du puits directement entre la source (24) et la sonde (2).

## Patentansprüche

1. Verfahren zur Prospektion in Bohrlöchern vermittels akustischer Wellen und insbesondere in abgelenkten Bohrlöchern vermittels einer Sende-Empfangsanordnung für akustische Wellen mit Empfangsmitteln, die wenigstens eine Sonde (2) umfassen, die mit Richtempfangsmitteln für akustische Wellen versehen ist, dadurch gekennzeichnet, daß
- man diese Sonde mit einer Betätigungsvorrichtung (39) an der Oberfläche über eine steife Kolonne verbindet, wobei die Sonde mechanisch hiervon intermittierend abkuppelbar ist, diese Sende-Empfangsanordnung auch Mittel zum Aussenden akustischer Wellen umfasst, die wenigstens eine Quelle für akustische Wellen (24) umfasst, die in der Kolonne zwischen der Sonde (2) und der Betätigungsvorrichtung (39) zwischengeschaltet ist, ein Mehrleiterkabel (6, 16, 30) zur Verbindung der Sende-Empfangsanordnung mit einer an der Oberfläche angeordneten Steuer- und Aufzeichnungsanordnung (31), Mitteln (43), um diese Empfänge gegen die Wandung des Bohrlochs zu pressen und ein System zur verschobenen bzw. verzögerten Verbindung, um automatisch die elektrische Verbindung nacheinander zwischen der Quelle und der Sonde nach deren Absenken in das Bohrloch und zwischen der Steuer- und Aufzeichnungsanordnung und dieser Quelle nach Absenken dieser in das Bohrloch herzustellen,
- man entkoppelt mechanisch die Sonde von der steifen Kolonne (20, 38) und man presst diese Empfängermittel gegen die Bohrlochwandung,
- diese Empfängermittel werden in fester Position gehalten, man löst das Aussenden der akustischen Wellen durch die Quelle ausgehend von der Steuer- und Aufzeichnungsanordnung aus,
- man überträgt an die Steuer- und Empfangsanordnung über das Mehrleiterkabel Signale, die von den das Bohrloch umgebenden Diskontinuitäten zugesandt und von den Empfängermitteln aufgenommen wurden,
- man wiederholt die beiden vorhergehenden Stufen an einer Vielzahl von Orten des Bohrlochs, wohin die Sende-Empfangsanordnung nacheinander durch Zug an der steifen Kolonne gebracht wurde und
- man stellt die mechanische Koppelung der Sonde mit der steifen Kolonne wieder her.

2. Prospektionsvorrichtung zur Durchführung des Verfahrens gemäß Anspruch 1, wenigstens eine Bohrlochsonde umfassend, die hinsichtlich des Querschnitts (2) dem des zu explorierenden Bohrlochs angepasst und mit Richtempfängern (C1, C2...) versehen ist, einer röhrenförmigen steifen Kolonne (20, 38), um die Sonde mit einer Betätigungsvorrichtung an der Oberfläche (39) zu verbinden und einem Kabel (6, 16, 30) um die Sonde mit einer Steuer- und Aufzeichnungsanordnung an der Oberfläche (31) zu verbinden, Sendemitteln, die auf dieser Kolonne zwischen der Sonde und der Betätigungsvorrichtung zwischengeschaltet sind und wenigstens eine Quelle (24) für Wellen umfassen, dadurch gekennzeichnet, daß sie Mittel (43) umfasst, um diese Empfängermittel mit der Bohrlochwandung zu verbinden, weiter ein System zur verzögerten oder verschobenen Verbindung, um eine elektrische Verbindung einerseits zwischen der Quelle und der Sonde
nach deren Absenken in das Bohrloch, und andererseits zwischen der Steuer- und Aufzeichnungsanordnung und der Quelle nach Absenken hiervon in das Bohrloch herzustellen.

3. Vorrichtung nach Anspruch 2, dadurch gekennzeichnet, daß die Sonde (2) und die Quelle (24) jeweils zwei Führungsblöcken (3, 21) zugeordnet sind, die einen röhrenförmigen Körper (4, 22) umfassen, der an der steifen Kolonne befestigt ist sowie ein Führungselement (8, 25), das im Körper (4, 22) zwischen einer rückgezogenen Position und einer vorgeschobenen Position beweglich ist, Mitteln (9, 35) zum Verriegeln der beiden Führungselemente in zurückgezogener Stellung bezogen auf diese röhrenförmigen Körper und hydraulische Mittel, die mit den beiden Führungselementen zusammenwirken, um diese letzteren gegen ihre jeweiligen vorgeschobenen Stellungen zu schieben, wobei die Sonde (2) mechanisch von dem röhrenförmigen in dieser vorgeschobenen Position zugeordneten Körper entkoppelt wird.

4. Vorrichtung nach Anspruch 2 oder 3, dadurch gekennzeichnet, daß das Verbindungssystem einen ersten Stecker zur elektrischen Verbindung (11) umfasst, der an dem der Sonde (2) zugeordneten Führungselement (8) befestigt ist, einer ersten elektrischen Buchse (15), die in flüssiger Umgebung, verbunden mit einem ersten Element (16) des Mehrleiterkabels einsteckbar ist, das mit dieser Quelle (24) verbunden ist, wobei ein zweiter elektrischer Verbindungsstecker (26) befestigt an dem der Quelle (24) zugeordneten Führungselement (25) vorgesehen ist, eine zweite elektrische Buchse (29), die in flüssiger Umgebung verbunden mit einem zweiten Element des Mehrleiterkabels (30) einsteckbar ist, das mit dieser mittigen Steuer- und Aufzeichnungsanordnung (31) verbunden ist, Führungsmittel (12, 27) der ersten und zweiten Buchsen (15, 29), die deren elektrische Verbindung mit den beiden entsprechenden Steckern (11, 26) ermöglicht sowie Mittel, um eine Fluidzirkulation in dieser Kolonne derart herzustellen, daß diese Buchsen gegen ihre Eingriffsspositionen jeweils in Kontakt mit den beiden Stekkern geschoben werden sowie Verriegelungsmittel (18, 23) dieser Buchsen in Eingriffsstellung.

5. Vorrichtung nach Anspruch 4, dadurch gekennzeichnet, daß sie Mittel zur Befestigung der Quelle und des ersten Elements des Mehrleiterkabels derart aufweist, daß die Sondenanordnung und die Quelle zwischen ihren rückgezogenen und ihren vorgeschobenen jeweiligen Positionen verschoben oder bewegt sind.

6. Vorrichtung nach einem der vorhergehenden Ansprüche, dadurch gekennzeichnet, daß die Quelle (24) wenigstens einen Vibrator umfasst.

7. Vorrichtung nach einem der Ansprüche 1 bis 5, dadurch gekennzeichnet, daß die Quelle (24) wenigstens einen Funkengeber umfasst.

8. Vorrichtung nach Anspruch 6, dadurch gekennzeichnet, daß jeder Vibrator vom magnetostriktiven oder piezoelektrischen Typ ist.

9. Vorrichtung nach Anspruch 6, dadurch gekennzeichnet, daß jeder Vibrator Mitteln zur Aussendung von akustischen Signalen zugeordnet ist, deren Frequenz derart gewählt ist, daß das Auflösungsvermögen in den vom Bohrloch durchsetzten Formationen in der Größenordnung von 1 m liegt.

10. Vorrichtung nach Anspruch 2, dadurch gekennzeichnet, daß die Empfängermittel (C1, C2...) mehrere Richtempfänger aufweisen, deren Achsen gemäß unterschiedlichen Richtungen gerichtet sind.

11. Vorrichtung nach Anspruch 10, dadurch gekennzeichnet, daß die Empfängermittel auf einem Träger (44) angeordnet sind, der bzgl. des Körpers der Sonde (2) ausrichtbar oder orientierbar ist.

12. Vorrichtung nach Anspruch 11, dadurch gekennzeichnet, daß er ein Mittel (46) umfasst, das mit der Steuer- und Aufzeichnungsanordnung (31) verbunden ist, um die Ausrichtung oder Orientierung dieses Trägers (44) zu erfassen sowie einen Motor (45) aufweist, der fernbetätigbar ist, um die Orientierung dieses Trägers zu verändern.

13. Vorrichtung nach Anspruch 6, dadurch gekennzeichnet, daß jeder Vibrator einem Generator für akustische Impulssignale zugeordnet ist.

14. Vorrichtung nach Anspruch 2, dadurch dakennzeichnet, daß die Quelle mehrere Elemente (E1, E2) umfasst, die unter Abstand zueinander längs der steifen Kolonne verteilt sind.

15. Vorrichtung nach Anspruch 2, dadurch gekennzeichnet, daß sie eine Vielzahl von Sonden umfasst, die unter Abstand voneinander längs der steifen Kolonne angeordnet sind.

16. Vorrichtung nach Anspruch 3 oder 4, dadurch gekennzeichnet, daß die Quelle (24) am Körper (22) ihres Führungsblocks befestigt ist und einen Durchlass (50) gemäß ihrer Achse aufweist, der die konjugierte Verschiebung zweier Führungselemente (8, 25) ermöglicht, wenn sie vermittels des Mehrleiterkabels verbunden sind, wobei die Vorrichtung Hilfsleiter (52) aufweist, um diese Quelle (24) mit diesem Mehrleiterkabel zu verbinden.

17. Vorrichtung nach einem der Ansprüche 2 bis 16, dadurch gekennzeichnet, daß sie Dämpfungsmittel umfasst, um die Wellen zu dämpfen, die sich längs des Bohrlochs direkt zwischen der Quelle (24) und der Sonde (2) fortpflanzen.

## Claims

1. Method of prospecting in wells using acoustic waves and in particular in inclined wells by means of a transmission-reception assembly for acoustic waves having reception means including at least one probe (2) provided with directional sensing means for acoustic waves, characterised in that
- the probe is connected to a manoeuvring device (39) at the surface by means of a rigid column, whereby the probe may be mechanically uncoupled intermittently from the column, the transmission-reception assembly also having acoustic wave transmission means with at least one acoustic wave source (24) inserted on the column between the probe (2) and the manoeuvring device (39), a multi-conductor cable (6, 16, 30) for connecting the transmission-reception assembly to a control and recording unit (31) located at the surface, means (43) for applying the sensing means against the wall of the well and a delayed connection system to automatically establish the electrical contact successively between the source and the probe after the probe has been lowered into the well and between the control and recording unit and the source after the source has been lowered into the well,
- the probe is mechanically uncoupled from the rigid column (20, 38) and the sensing means are applied against the well wall,
- the sensing means are retained in a fixed position and transmission of acoustic waves is triggered by the source from the control and recording unit,
- signals reflected by the discontinuities surrounding the well and received by the sensing means are transmitted to the control and recording unit by the multi-conductor cable,
- the two previous stages are repeated in a plurality of locations in the well to which the transmission-reception assembly is moved by means of traction on the rigid column, and
- the probe is coupled again with the rigid column.

2. A prospecting device for implementing the method in accordance with claim 1, having at least one well probe with a section (2) adapted to that of the well under investigation, provided with directional sensing means (C1, C2...), a rigid tubular column (20, 38) to connect the probe to a manoeuvring device (39) at the surface and a cable (6, 16, 30) to connect the probe to a control and recording unit (31) at the surface, transmission means inserted on the column between the probe and the manoeuvring device having at least one wave source (24), characterised in that it has means (43) for coupling the sensing means with the well wall, a delayed connection system to establish the electrical inter-connection between the source and the probe after the probe has been lowered into the well on the one hand and between the control and recording unit and the source after the source has been lowered into the well on the other.

3. A device in accordance with claim 2, characterised in that the probe (2) and the source (24) are associated respectively with two guide blocks (3, 21) each having a tubular body (4, 22) fixed to the rigid column and a guide element (8, 25) that may be moved in the body (4, 22) between a retracted position and an advanced position, locking means (9, 35) for the two guide elements when in the retracted position in relation to the tubular bodies and hydraulic means co-operating with the two guide elements to push these elements into their respective advanced positions, the probe (2) being mechanically uncoupled from the associated tubular body (4) in the advanced position.

4. A device in accordance with claim 2 or 3, characterised in that the connection system has a first electric connection plug (11) fixed to the guide element (8) associated with the probe (2), a first electric socket (15) that may be connected in a liquid medium linked to a first multi-conductor cable element (16) which is connected to the source (24), a second electric connection plug (26) fixed to the guide element (25) associated with the source (24), a second electric socket (29) that may be connected in a liquid medium linked to a second multi-conductor cable element (30), which is connected to the control and recording unit (31), guide means (12, 27) of the first and second sockets (15, 29) enabling them to be electrically connected with the two corresponding plugs (11, 26) and means for establishing a flow of fluid in the column so as to push the sockets towards their engaged positions in contact with the two plugs respectively, and locking means (18, 33) to secure the sockets in the engaged position.

5. A device in accordance with claim 4, characterised in that it has means for securing the source and the first multi-conductor cable element together so that the probe and the source may be moved together between their retracted positions and their advanced positions.

6. A device in accordance with one of the previous claims, characterised in that the source (24) has at least one vibrator.

7. A device in accordance with one of claims 1 to 5, characterised in that the source (24) has at least one sparker.

8. A device in accordance with claim 6, characterised in that each vibrator is of the magnetostrictive or piezoelectric type.

9. A device in accordance with claim 6, characterised in that each vibrator is associated with means for transmitting acoustic signals whose frequency is selected so that the power of resolution in the formations crossed by the well is in the order of 1 metre.

10. A device in accordance with claim 2, characterised in that the sensing means (C1, C2...) have several directional sensors whose axes are directed along different directions.

11. A device in accordance with claim 10, characterised in that the sensing means are arranged on a support (44) that may be oriented in relation to the body of the probe (2).

12. A device in accordance with claim 11, characterised in that it has a means (46) connected to the control and recording unit (31) for detecting the orientation of the support (44) and a motor means (45) that may be activated from a distance to change the orientation of the support.

13. A device in accordance with claim 6, characterised in that each vibrator is associated with a generator for issuing pulsed acoustic signals.

14. A device in accordance with claim 2, characterised in that the source has several elements (E1, E2) spaced at a distance from each other along the rigid column.

15. A device in accordance with claim 2, characterised in that it has a plurality of probes separated at a distance from each other along the rigid column.

16. A device in accordance with claim 3 or 4, characterised in that the source (24) is fixed to the body (22) of its guide block and has a passage (50) along its axis enabling the two guide elements (8, 25) to be moved in conjunction with each other when they are connected to the multi-conductor cable means, the device having auxiliary conductor means (52) to link the source (24) to the multi-conductor cable.

17. A device in accordance with one of claims 2 to 16, characterised in that it has damping means to attenuate the waves being generated along the well directly between the source (24) and the probe (2).
